# EUROPÄISCHE PATENTSCHRIFT

(11) **EP 3 983 261 B1**
(45) Veröffentlichungstag und Bekanntmachung des Hinweises auf die Patenterteilung: **08.11.2023**
(21) Anmeldenummer: 20733381.6
(22) Anmeldetag: 10.06.2020
(51) Int. Cl.: B60N 2/06, B60N 2/68

(54) **LÄNGSEINSTELLER, FAHRZEUGSITZ**
LONGITUDINAL ADJUSTER, VEHICLE SEAT
RÉGLAGE LONGITUDINAL, SIÈGE DE VÉHICULE

(30) Priorität: 14.06.2019 DE 102019116314; 22.08.2019 DE 102019122606; 19.09.2019 DE 102019125196
(43) Veröffentlichungstag der Anmeldung: 20.04.2022
(73) Patentinhaber: KEIPER Seating Mechanisms Co., Ltd., Shanghai, 201315 (CN)
(72) Erfinder: GREGOR, Peter, 91311 Trencianske Stankovce (SK); SCHUERMANN, Thorsten, 51519 Odenthal (DE); SPRENGER, Erik, 42929 Wermelskirchen (DE); STEMMER, Juergen, 42897 Remscheid (DE); SULAK, Andrej, 95652 Podluzany (SK)
(74) Vertreter: Kutzenberger Wolff & Partner
(86) Internationale Anmeldenummer: PCT/EP2020/066114
(87) Internationale Veröffentlichungsnummer: WO 2020/249625

(56) Entgegenhaltungen:
- EP-A1- 3 492 312
- DE-A1-102009 003 280

## Beschreibung

Die Erfindung betrifft einen Längseinsteller, insbesondere für einen Fahrzeugsitz, der Längseinsteller aufweisend mindestens ein Schienenpaar, welches aus einer ersten Schiene und einer relativ zur ersten Schiene in Längsrichtung verschiebbaren zweiten Schiene gebildet ist, wobei die Schienen unter Bildung eines Innenkanals einander wechselseitig umgreifen, wobei in dem Innenkanal eine mit der zweiten Schiene verbundene Spindelmutter und eine mit der Spindelmutter wirkverbundene Spindel angeordnet sind, wobei an einem Ende der ersten Schiene ein mittels eines Motors antreibbares und mit der Spindel zusammenwirkendes Getriebe angeordnet ist, wobei die Spindel mittels eines Außengewindes der Spindel in ein Innengewinde eines Schneckenrades des Getriebes eingeschraubt ist, und die Spindel mittels eines Fixierelements drehfest mit dem Schneckenrad verbunden ist. Die Erfindung betrifft ferner einen Fahrzeugsitz.

### Stand der Technik

Aus der DE 10 2005 023 095 A1 ist eine Antriebsvorrichtung für einen Kraftfahrzeugsitz in einer Gleitvorrichtung bekannt. Die Antriebsvorrichtung zur Anwendung mit einer Kraftfahrzeugsitz-Gleitvorrichtung umfasst zusammenpassende feste und bewegliche Schienenteile, die zwischen einer vorderen Stellung und einer hinteren Stellung bewegt werden können. Die Antriebsvorrichtung umfasst eine verlängerte Spindel, eine Spindelmutter, ein Getriebe und eine Einbauvorrichtung. Die Spindel definiert eine Spindelachse und hat ein sich in Längsrichtung erstreckendes Spindelgewinde. Die Spindelmutter kann sicher auf einem ersten Schienenteil befestigt werden und hat ein Innengewinde, das in das Spindelgewinde eingreifen kann. Das Getriebe kann an ein jeweils anderes Schienenteil montiert werden und dreht selektiv die Spindel um die Spindelachse. Die Spindel der Antriebsvorrichtung ist mit einem Spindelrad versehen, das sich in montiertem Zustand der Antriebsvorrichtung durch Spindelradöffnungen des beweglichen Schienenteils nach außen erstreckt.

Aus der DE 10 2017 218 492 A1 ist ein Längseinsteller, insbesondere für einen Fahrzeugsitz, bekannt. Der Längseinsteller weist mindestens ein Schienenpaar, welches aus einer ersten Schiene und einer relativ zur ersten Schiene in Längsrichtung verschiebbaren zweiten Schiene gebildet ist, auf, wobei die Schienen unter Bildung eines Innenkanals einander wechselseitig umgreifen. In dem Innenkanal sind eine mit der zweiten Schiene gelagerte Spindelmutter und eine mit der Spindelmutter wirkverbundene Spindel angeordnet, wobei an einem Ende der ersten Schiene ein mittels eines Motors antreibbares und mit der Spindel zusammenwirkendes Getriebe angeordnet ist. Die Spindel ist an einem vorderen Endabschnitt der Spindel in dem Getriebe und an einem hinteren Endabschnitt der Spindel in einem Drehlager der ersten Schiene gelagert. In Längsrichtung vor der Spindelmutter ist ein erster Querriegel in einem Schlitz der ersten Schiene aufgenommen, wobei die Spindel kontaktfrei, insbesondere unter Bildung eines umlaufenden Spaltes, durch eine Öffnung des ersten Querriegels hindurchgeführt ist, wobei in Längsrichtung nach vorne beabstandet zum ersten Querriegel ein Absatz der Spindel angeordnet ist, wobei in Reaktion auf eine vorgegebene Krafteinwirkung, beispielsweise im Crashfall, insbesondere durch eine Verschiebung der ersten Schiene, der erste Querriegel zwischen der ersten Schiene und dem Absatz verklemmt, und hierdurch eine Kraft von der ersten Schiene über den ersten Querriegel, den Absatz, die Spindel und die Spindelmutter zur zweiten Schiene ableitbar ist.

Aus der DE 10 2006 035 437 A1 sowie der JP 2007-126103 A ist jeweils ein Längseinsteller für einen Fahrzeugsitz bekannt, welcher eine drehfeste Steckverbindung zwischen einem geriffelten und gewindefreien Abschnitt einer Spindel und einem entsprechend geriffelten Gegenabschnitt eines Schneckenrades eines Spindelgetriebes vorsieht.

Aus der DE 10 2011 004 143 A1 sowie der WO 2016/150790 A1 ist jeweils ein Längseinsteller für einen Fahrzeugsitz bekannt. Der Längseinsteller weist jeweils mindestens ein Schienenpaar, welches aus einer ersten Schiene und einer relativ zur ersten Schiene in Längsrichtung verschiebbaren zweiten Schiene gebildet ist, auf, wobei die Schienen unter Bildung eines Innenkanals einander wechselseitig umgreifen. In dem Innenkanal sind eine ortsfest und rotationsfest mit der zweiten Schiene verbundene Spindel und ein mit der Spindel wirkverbundenes Spindelgetriebe angeordnet. Eine Längseinstellung des Fahrzeugsitzes erfolgt durch Abfahren der Spindel mittels des Spindelgetriebes.

Aus der EP 3 492 312 A1 ist eine Längsverstelleinheit eines Sitzes in einem Kraftfahrzeug bekannt, umfassend ein Gehäuse mit einer Durchgangsöffnung, die entlang einer Längsachse angeordnet ist und eine erste Spindelöffnung und eine zweite Spindelöffnung aufweist. Ferner weist die Längsverstelleinheit eine Spindel auf, die durch die Durchgangsöffnung entlang der Längsachse durch das Gehäuse durchführbar ist. Die Längsverstelleinheit weist eine Spindelmutter und eine Schnecke, die die Spindelmutter antreibt und in dem Gehäuse durch einen beidseitigen Lagerbund gelagert ist, auf, wobei die Spindelmutter in dem Gehäuse in der Längsachse beidseitig drehbar und axial gelagert ist, wobei eine Spindelkontermutter vorgesehen ist, durch welche die Spindel mit der Spindelmutter drehfest verbunden ist.

DE 10 2009 003 280 A1 beschreibt einen Gewindespindel-Verstellantrieb mit einer Gewindespindel, die mit einem Schneckenrad zusammenwirkt, wobei das Schneckenrad über eine Außenverzahnung mit einem Abtriebselement eines Antriebs gekoppelt ist. Das Schneckenrad weist ein Innengewinde auf, das mit einem Außengewinde der Gewindespindel kämmt. Es ist vorgesehen, dass in dem Innengewinde des Schneckenrades bzw. dem Außengewinde der Gewindespindel wenigstens eine Ausnehmung für ein Sperrelement ausgebildet ist und dass zum Blockieren des Schneckenrades relativ zur Gewindespindel das Sperrelement in der wenigstens einen Ausnehmung angeordnet ist, wohingegen zum Erzielen einer Relativbewegung der Gewindespindel zum Schneckenrad in der wenigstens einen Ausnehmung kein Sperrelement angeordnet ist.

### Aufgabe

Der Erfindung liegt die Aufgabe zu Grunde, einen Längseinsteller eingangs genannter Art zu verbessern, insbesondere einen Längseinsteller mit einer erhöhten Lastaufnahmefähigkeit, sowie einen entsprechenden Fahrzeugsitz bereitzustellen.

### Lösung

Diese Aufgabe wird erfindungsgemäß gelöst durch einen Längseinsteller nach Anspruch 1.

Dadurch, dass das Fixierelement koaxial zu einer Spindelachse der Spindel angeordnet und zwischen einem gewindefreien Abschnitt am vorderen Endabschnitt der Spindel und dem Schneckenrad verpresst ist, ist die Spindel drehfest mit dem Schneckenrad verbunden.

Vorzugsweise ist die Spindel am vorderen Endabschnitt, mittels eines Außengewindes der Spindel in ein Innengewinde eines Schneckenrades des Getriebes eingeschraubt. Dadurch kann eine in Längserstreckungsrichtung der Spindel belastbare Verbindung mit dem Schneckenrad geschaffen werden, wodurch eine entsprechende Kraftübertragung in Längserstreckungsrichtung ermöglicht wird.

Dadurch, dass die Spindel mittels eines Fixierelements drehfest mit dem Schneckenrad verbunden ist, ist weiter eine Drehmomentübertragung um die Längserstreckungsachse der Spindel von dem Schneckenrad auf die Spindel ermöglicht.

Die erste Schiene kann bevorzugt eine mit einem Fahrzeugsitz verbindbare Sitzschiene, insbesondere Oberschiene, sein. Die zweite Schiene kann bevorzugt eine mit einer Fahrzeugstruktur verbindbare Bodenschiene, insbesondere Unterschiene, sein.

In Reaktion auf eine vorgegebene Krafteinwirkung, beispielsweise im Crashfall, kann eine Kraft von der ersten Schiene über einen Getriebehalter, das Getriebe, die Spindel und die Spindelmutter zur zweiten Schiene ableitbar sein.

Der Längseinsteller kann einen Getriebehalter aufweisen. Der Getriebehalter kann zwei zueinander parallele Schenkel aufweisen. Die beiden gegenüberliegenden Schenkel sind bevorzugt in an sich bekannter Weise über einen Steg miteinander verbunden. An jeden der Schenkel kann sich ein Befestigungsabschnitt anschließen, mittels dem der Getriebehalter an der ersten Schiene gehalten ist. Die Befestigungsabschnitte können gegenüber dem jeweiligen angrenzenden Schenkel um etwa 90° abgebogen sein. In montiertem Zustand des U-förmigen Getriebehalters kann das Getriebe zwischen den Schenkeln aufgenommen sein. Zur Bereitstellung einer im Crashfall lasttragenden Verbindung zwischen dem Getriebehalter und der ersten Schiene können an den Schenkeln des Getriebehalters in Querrichtung seitlich abstehende Vorsprünge vorgesehen sein, welche durch korrespondierende Ausnehmungen in einem seitlichen Abschnitt der zweiten Schiene zusammenwirken.

Die Spindel weist erfindungsgemäß an ihrem vorderen Endabschnitt einen gewindefreien Abschnitt auf. Der vordere Endabschnitt der Spindel kann einen gewindefreien Abschnitt und einen Abschnitt mit Gewinde aufweisen. Die Spindel kann an einem hinteren Endabschnitt einen gewindefreien Abschnitt aufweist. Der hintere Endabschnitt der Spindel kann einen gewindefreien Abschnitt und einen Abschnitt mit Gewinde aufweisen.

Das Fixierelement kann eine formschlüssige Verbindung der Spindel mit dem Schneckenrad bereitstellen. Das Fixierelement kann eine kraftschlüssige Verbindung der Spindel mit dem Schneckenrad bereitstellen. Das Fixierelement ist eine Buchse, erfindungsgemäß eine hohlzylindrische Buchse. Das Fixierelement kann eine plastisch deformierte Buchse sein. Das Fixierelement kann eine in einer axialen Richtung plastisch deformierte Buchse sein. Das Fixierelement kann eine in einer radialen Richtung plastisch deformierte Buchse sein. Das Fixierelement kann eine in einer axialen Richtung und in einer radialen Richtung plastisch deformierte Buchse sein.

Ein hinterer Endabschnitt der Spindel kann in einem Drehlager in der ersten Schiene gelagert sein. Ein hinterer Endabschnitt der Spindel kann mittels des gewindefreien Abschnitts in dem Drehlager in der ersten Schiene gelagert sein. Im Bereich des Drehlagers an dem hinteren Endabschnitt der Spindel können zusätzliche Mittel zur Kraftableitung, insbesondere im Falle eines Heckaufpralls, vorgesehen sein. Derartige Mittel sind beispielsweise in der DE 10 2017 218 492 A1 beschrieben.

Das Außengewinde der Spindel kann in Form eines Trapezgewindes ausgestaltet sein. Das Innengewinde des Schneckenrades kann in Form eines Trapezgewindes ausgestaltet sein. Das Außengewinde der Spindel und das Innengewinde des Schneckenrades kann jeweils zweigängig ausgestaltet sein.

Die Aufgabe wird ferner erfindungsgemäß gelöst durch einen Fahrzeugsitz mit einem erfindungsgemäßen Längseinsteller, insbesondere einem Längseinsteller gemäß der vorstehenden Beschreibung.

### Figuren und Ausführungsformen der Erfindung

Bevor nachfolgend Ausgestaltungen der Erfindung eingehender an Hand von Figuren beschrieben werden, ist zunächst festzuhalten, dass die Erfindung nicht auf die beschriebenen Komponenten beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: einen erfindungsgemäßen Fahrzeugsitz,
- Fig. 2:: einen Längsschnitt eines erfindungsgemäßen Längseinstellers des Fahrzeugsitzes von Fig. 1,
- Fig. 3:: ausschnittsweise eine vergrößerte Darstellung von Fig. 2,
- Fig. 4:: einen Getriebehalter mit Getriebe, eine Spindel und ein Fixierelement in einem ersten Montagezustand,
- Fig. 5:: der Getriebehalter mit Getriebe, die Spindel und das Fixierelement in einem zweiten Montagezustand, und
- Fig. 6:: der Getriebehalter mit Getriebe, die Spindel und das Fixierelement in einem dritten Montagezustand.

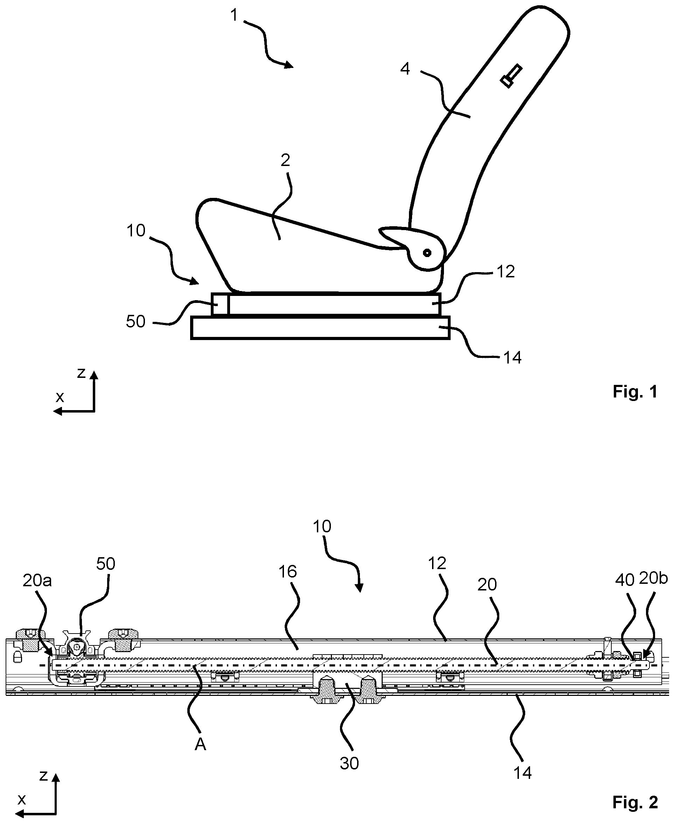

Ein in Fig. 1 schematisch dargestellter Fahrzeugsitz 1 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 1 weitgehend horizontal und vorzugsweise parallel zu einer Fahrzeuglängsrichtung, die der gewöhnlichen Fahrtrichtung des Fahrzeuges entspricht. Eine zu der Längsrichtung x senkrecht verlaufende Querrichtung ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung. Bei einem im Fahrzeug eingebauten Fahrzeugsitz 1 verläuft die Vertikalrichtung z parallel zu der Fahrzeughochachse.

Die verwendeten Positionsangaben und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition mit aufrecht stehender Lehne 4 und wie üblich in Fahrtrichtung ausgerichtet ist. Der Fahrzeugsitz 1 kann jedoch auch in abweichender Ausrichtung, beispielsweise quer zur Fahrtrichtung verbaut werden.

Der in Fig. 1 gezeigte Fahrzeugsitz 1 weist ein Sitzteil 2 und die relativ zum Sitzteil 2 in ihrer Neigung einstellbare Lehne 4 auf. Eine Neigung der Lehne 4 kann beispielsweise mittels eines Rastbeschlages oder eines Getriebebeschlages einstellbar sein. Der Fahrzeugsitz 1 ist zur Einstellung einer Sitzlängsposition auf einem Längseinsteller 10 montiert.

Fig. 2 zeigt den erfindungsgemäßen Längseinsteller 10 des Fahrzeugsitzes 1 von Fig. 1. Der Längseinsteller 10 weist wenigstens ein Schienenpaar, vorzugsweise zwei Schienenpaare, auf. Die Schienenpaare sind jeweils aus einer ersten Schiene 12, insbesondere zur Verbindung mit einer Sitzstruktur, und einer zweiten Schiene 14, insbesondere zur Verbindung mit einer Fahrzeugstruktur, gebildet. Die Schienen 12, 14 des Schienenpaares sind in Längsrichtung x relativ zueinander verschiebbar und umgreifen unter Bildung eines Innenkanals 16 einander wechselseitig. In dem Innenkanal 16 ist eine an der zweiten Schiene 14 verbundene Spindelmutter 30 und eine mit der Spindelmutter 30 wirkverbundene Spindel 20 angeordnet. Die Spindelmutter 30 ist vorliegend mit der zweiten Schiene 14 fixiert gehalten, insbesondere verschraubt. Die Spindel 20 erstreckt sich entlang einer Spindelachse A parallel zur Längsrichtung x.

An einem vorderen Endabschnitt 20a der Spindel 20 ist ein mittels eines nicht dargestellten Motors antreibbares und mit der Spindel 20 zusammenwirkendes Getriebe 50 angeordnet. Der Motor kann auf einem zwischen den beiden Getrieben 50 der jeweiligen Schienenpaare montierten Motorträger gehalten sein und kann mittels einer in Fig. 2 nicht dargestellten Welle die beiden Getriebe 50 antreiben. Der Motor treibt hierbei insbesondere eine um eine Schneckendrehachse drehbar gelagerte Schnecke 52 an, mittels welcher eine senkrecht zur Schneckendrehachse drehbar gelagertes Schneckenrad 54 in einem vorbestimmten Untersetzungsverhältnis antreibbar ist. Die Schnecke 52 und das Schneckenrad 54 sind bevorzugt in einem gemeinsamen Getriebegehäuse aufgenommen. Das Schneckenrad 54 weist einen ein Innengewinde 56 aufweisenden zentralen Abschnitt 54a und zwei parallel zur Längsrichtung x an den zentralen Abschnitt 54a angrenzende Lagerabschnitte 54b auf. Wenigstens der in Längsrichtung x vordere Lagerabschnitt 54b ist gewindefrei ausgestaltet.

Das Schneckenrad 54 ist vorgesehen, um die Spindel 20 rotatorisch um eine Spindelachse A anzutreiben. Das Getriebe 50 lagert den vorderen Endabschnitt 20a der Spindel 20. Ein hinterer Endabschnitt 20b der Spindel 20 ist in einem Drehlager 40 an der ersten Schiene 12 gelagert.

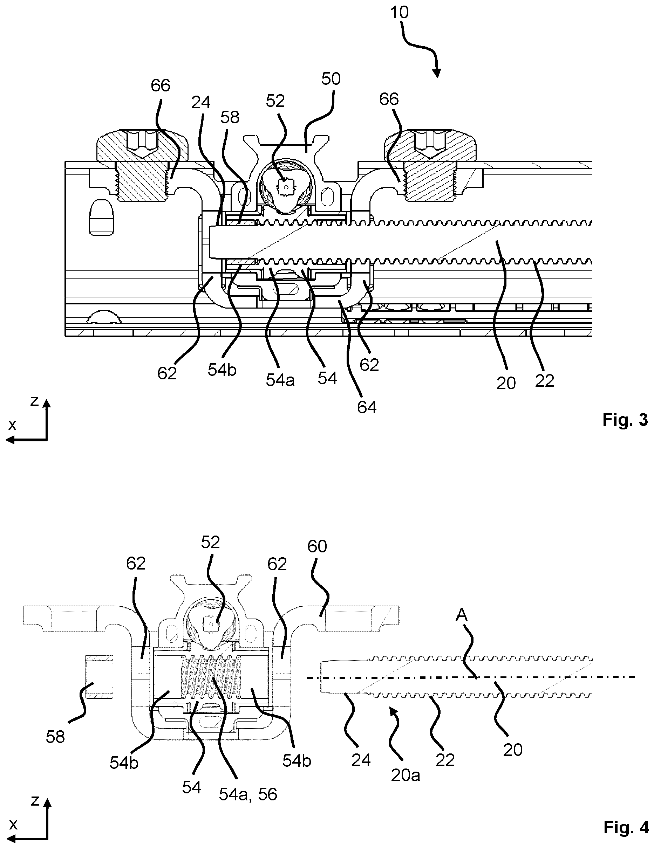

Fig. 3 zeigt eine ausschnittsweise vergrößerte Darstellung des Längseinstellers 10 im Bereich des vorderen Endabschnitts der Spindel 20. Das Getriebe 50 ist mittels eines Getriebehalters 60 mit der ersten Schiene12 verbunden. Der Getriebehalter 60 weist zwei zueinander parallele Schenkel 62 auf. Die beiden gegenüberliegenden Schenkel 62 sind in an sich bekannter Weise über einen Steg 64 miteinander verbunden. An jeden der Schenkel 62 schließt sich ein Befestigungsabschnitt 66 an, mittels dem der Getriebehalter 60 an der ersten Schiene 12 gehalten ist. Die Befestigungsabschnitte 66 sind gegenüber ihrem jeweiligen Schenkel 62 um etwa 90° abgebogen. In montiertem Zustand des U-förmigen Getriebehalters 60, ist das Getriebe 50 zwischen den Schenkeln 62 aufgenommen.

Bei bekannten Vorrichtungen zur Sitzlängseinstellung weisen die Befestigungsabschnitte 66 üblicherweise Gewindebohrungen auf, welche in Wechselwirkung mit entsprechenden Schrauben und/oder Gewindebolzen eine Verbindung mit der ersten Schiene 12 bewirken. Der Getriebehalter 60 kann alternativ mit der ersten Schiene 12 verschweißt oder vernietet sein.

Die Spindel 20 ist durch einen der zwei zueinander parallelen Schenkel 62 des im Wesentlichen U-förmigen Getriebehalters 60 hindurchgeführt. Vorliegend ist die Spindel 20 durch den parallel zur Längsrichtung x hinteren Schenkel 62 hindurchgeführt. Die Spindel 20 ist an ihrem vorderen Endabschnitt 20a mittels des Außengewindes 22 der Spindel 20 in das Innengewinde 56 eines Schneckenrades 54 eingeschraubt. Die Spindel 20 ist mittels eines Fixierelements 58 drehfest mit dem Schneckenrad 54 verbunden.

Fig. 4 zeigt den vorderen Endabschnitt 20a der Spindel 20, das Fixierelement 58 und eine Baugruppe, gebildet aus dem Getriebehalter 60 und dem Getriebe 50, in einem ersten Montagezustand, in welchem die Spindel 20 und das Fixierelemente 58 nicht mit der Baugruppe verbunden sind. Die Spindel 20 weist an ihrem vorderen Endabschnitt 20a einen gewindefreien Abschnitt 24 auf.

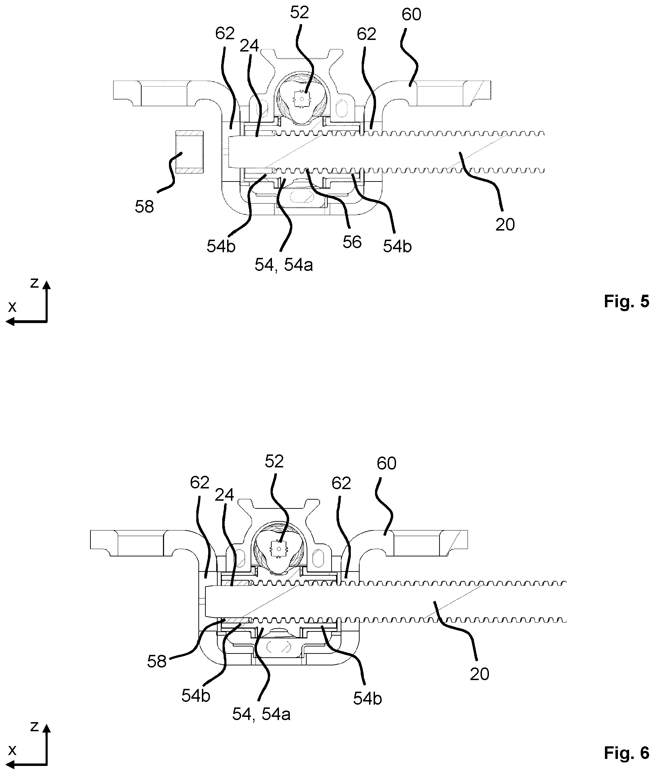

Fig. 5 zeigt einen anschließenden Montagezustand, in welchem die Spindel 20 durch den parallel zur Längsrichtung x hinteren Schenkel 62 des Getriebehalters 60 hindurchgeführt und mittels des Außengewindes 22 der Spindel 20 in das Innengewinde 56 des Schneckenrades 54 eingeschraubt ist. Die Spindel 20 ist durch das Innengewinde 56 des Schneckenrades 54 derart eingeschraubt, dass der gewindefreie Abschnitt 24 der Spindel 20 durch das Innengewinde 56 hindurch bis in den Lagerabschnitt 54b ragt, vorliegend durch diesen hindurch ragt.

Fig. 6 zeigt einen dritten, insbesondere letzten, Montagezustand, in welchem die zuvor in das Schneckenrad 54 eingeschraubte Spindel 20 und das Schneckenrad 54 mittels des Fixierelements 58 drehfest miteinander verbunden sind. Hierzu ist das Fixierelement 58 von dem vorderen Endabschnitt 20a der Spindel 20 in einen zuvor leeren Bereich, zwischen dem gewindefreien Abschnitt 24 der Spindel 20 und dem gewindefreien Abschnitt 24 umschließenden Lagerabschnitt 54b des Schneckenrades 50, eingeführt, vorliegend eingepresst. Durch das Einpressen des Fixierelements 58 sind die Spindel 20 und das Schneckenrad 54 reibkraftschlüssig miteinander verbunden.

Obwohl die Erfindung in den Figuren und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 2: Sitzteil
- 4: Lehne
- 10: Längseinsteller
- 12: erste Schiene
- 14: zweite Schiene
- 16: Innenkanal
- 20: Spindel
- 20a: vorderer Endabschnitt (der Spindel 20)
- 20b: hinterer Endabschnitt (der Spindel 20)
- 22: Außengewinde
- 24: gewindefreier Abschnitt
- 30: Spindelmutter
- 40: Drehlager
- 50: Getriebe
- 52: Schnecke
- 54: Schneckenrad
- 54a: zentraler Abschnitt
- 54b: Lagerabschnitt
- 56: Innengewinde
- 58: Fixierelement
- 60: Getriebehalter
- 62: Schenkel
- 64: Steg
- 66: Verbindungsabschnitt
- A: Spindelachse (der Spindel 20)
- x: Längsrichtung
- z: Vertikalrichtung

## Patentansprüche

1. Längseinsteller (10), insbesondere für einen Fahrzeugsitz (1), der Längseinsteller (10) aufweisend mindestens ein Schienenpaar, welches aus einer ersten Schiene (12) und einer relativ zur ersten Schiene (12) in Längsrichtung (x) verschiebbaren zweiten Schiene (14) gebildet ist, wobei die Schienen (12, 14) unter Bildung eines Innenkanals (16) einander wechselseitig umgreifen, wobei in dem Innenkanal (16) eine mit der zweiten Schiene (14) verbundene Spindelmutter (30) und eine mit der Spindelmutter (30) wirkverbundene Spindel (20) angeordnet sind, wobei an einem Ende der ersten Schiene (12) ein mittels eines Motors antreibbares und mit der Spindel (20) zusammenwirkendes Getriebe (50) angeordnet ist, wobei die Spindel (20) mittels eines Außengewindes (22) der Spindel (20) in ein Innengewinde (56) eines Schneckenrades (54) des Getriebes (50) eingeschraubt ist, und die Spindel (20) mittels eines Fixierelements (58) drehfest mit dem Schneckenrad (54) verbunden ist, wobei das Fixierelement (58) koaxial zu einer Spindelachse (A) der Spindel (20) angeordnet ist,
**dadurch gekennzeichnet, dass**
das Fixierelement (58) zwischen einem an einem vorderen Endabschnitt (20a) der Spindel (20) angeordneten gewindefreien Abschnitt (24a) und dem Schneckenrad (54) verpresst ist, wobei das Fixierelement (58) eine hohlzylindrische Buchse ist.

2. Längseinsteller (10) gemäß Anspruch 1, wobei die Spindel (20) am vorderen Endabschnitt (20a), in das Innengewinde (56) des Schneckenrades (54) des Getriebes (50) eingeschraubt ist.

3. Längseinsteller (10) gemäß einem der Ansprüche 1 oder 2, wobei in Reaktion auf eine vorgegebene Krafteinwirkung, beispielsweise im Crashfall, eine Kraft von der ersten Schiene (12) über das Getriebe (50), die Spindel (20) und die Spindelmutter (30) zur zweiten Schiene (14) ableitbar ist.

4. Längseinsteller (10) gemäß einem der Ansprüche 1 bis 3, wobei das Fixierelement (58) eine formschlüssige Verbindung der Spindel (20) mit dem Schneckenrad (54) bereitstellt.

5. Längseinsteller (10) gemäß einem der Ansprüche 1 bis 4, wobei das Fixierelement (58) eine kraftschlüssige Verbindung der Spindel (20) mit dem Schneckenrad (54) bereitstellt.

6. Längseinsteller (10) gemäß einem der Ansprüche 1 bis 5, wobei die Spindel (20) an einem hinteren Endabschnitt (20b) einen gewindefreien Abschnitt (24b) aufweist.

7. Längseinsteller (10) gemäß einem der Ansprüche 1 bis 6, wobei ein hinterer Endabschnitt (20b) der Spindel (20) in einem Drehlager (40) in der ersten Schiene (12) gelagert ist.

8. Längseinsteller (10) gemäß Anspruch 7, wobei der hintere Endabschnitt (20b) der Spindel (20) mittels eines gewindefreien Abschnitts (24b) in dem Drehlager (40) gelagert ist.

9. Längseinsteller (10) gemäß einem der Ansprüche 1 bis 8, wobei das Außengewinde (22) der Spindel (20) und das Innengewinde (56) des Schneckenrades (54) in Form eines Trapezgewindes ausgestaltet sind.

10. Längseinsteller (10) gemäß einem der Ansprüche 1 bis 9, wobei das Außengewinde (22) der Spindel (20) und das Innengewinde (56) des Schneckenrades (54) zweigängig ausgestaltet sind.

11. Fahrzeugsitz (1) mit einem Längseinsteller (10) gemäß einem der vorherstehenden Ansprüche.

## Claims

1. Longitudinal adjustment mechanism (10), in particular for a vehicle seat (1), the longitudinal adjustment mechanism (10) having at least one pair of rails formed from a first rail (12) and a second rail (14) which is displaceable in the longitudinal direction (x) relative to the first rail (12), wherein the rails (12, 14) alternately engage around each other forming an inner channel (16), wherein a spindle nut (30) connected to the second rail (14) and a spindle (20) operatively connected to the spindle nut (30) are arranged in the inner channel (16), wherein a gear (50) which is drivable by means of a motor and interacts with the spindle (20) is arranged at one end of the first rail (12), wherein the spindle (20) is screwed by means of an external thread (22) of the spindle (20) into an internal thread (56) of a worm wheel (54) of the gear (50), and the spindle (20) is connected by means of a fixing element (58) to the worm wheel (54) for conjoint rotation, wherein the fixing element (58) is arranged coaxially with respect to a spindle axis (A) of the spindle (20),
**characterized in that**
the fixing element (58) is pressed between a thread-free section (24a), which is arranged on a front end section (20a) of the spindle (20), and the worm wheel (54), the fixing element (58) being a hollow-cylindrical bushing.

2. Longitudinal adjustment mechanism (10) according to Claim 1, wherein the spindle (20) is screwed at the front end section (20a) into the internal thread (56) of the worm wheel (54) of the gear (50).

3. Longitudinal adjustment mechanism (10) according to either of Claims 1 and 2, wherein in response to a predetermined action of force, for example in the event of a crash, a force from the first rail (12) is conductable away via the gear (50), the spindle (20) and the spindle nut (30) to the second rail (14).

4. Longitudinal adjustment mechanism (10) according to one of Claims 1 to 3, wherein the fixing element (58) provides a form-fitting connection between the spindle (20) and the worm wheel (54).

5. Longitudinal adjustment mechanism (10) according to one of Claims 1 to 4, wherein the fixing element (58) provides a force-fitting connection between the spindle (20) and the worm wheel (54).

6. Longitudinal adjustment mechanism (10) according to one of Claims 1 to 5, wherein the spindle (20) has a thread-free section (24b) at a rear end section (20b).

7. Longitudinal adjustment mechanism (10) according to one of Claims 1 to 6, wherein a rear end section (20b) of the spindle (20) is mounted in a rotary bearing (40) in the first rail (12).

8. Longitudinal adjustment mechanism (10) according to Claim 7, wherein the rear end section (20b) of the spindle (20) is mounted in the rotary bearing (40) by means of a thread-free section (24b).

9. Longitudinal adjustment mechanism (10) according to one of Claims 1 to 8, wherein the external thread (22) of the spindle (20) and the internal thread (56) of the worm wheel (54) are configured in the form of a trapezoidal thread.

10. Longitudinal adjustment mechanism (10) according to one of Claims 1 to 9, wherein the external thread (22) of the spindle (20) and the internal thread (56) of the worm wheel (54) are configured with two starts.

11. Vehicle seat (1) with a longitudinal adjustment mechanism (10) according to one of the preceding claims.

## Revendications

1. Dispositif (10) de réglage longitudinal, en particulier pour un siège de véhicule (1), le dispositif (10) de réglage longitudinal présentant au moins une paire de rails, qui est formée par un premier rail (12) et un deuxième rail (14) aptes à être déplacé dans la direction longitudinale (x) par rapport au premier rail (12), les rails (12, 14) étant mutuellement en engagement de façon à former un canal intérieur (16), un écrou de broche (30) relié au deuxième rail (14) et une broche (20) reliée fonctionnellement à l'écrou de broche (30) étant disposés dans le canal intérieur (16), une transmission (50), apte à être entraînée au moyen d'un moteur et coopérant avec la broche (20), étant disposée à une extrémité du premier rail (12), la broche (20) étant vissée au moyen d'un filetage extérieur (22) de la broche (20) dans un filetage intérieur (56) d'une roue à vis sans fin (54) de la transmission (50), et la broche (20) est reliée de manière solidaire en rotation à la roue à vis sans fin (54) au moyen d'un élément de fixation (58), l'élément de fixation (58) étant agencé coaxialement à un axe de broche (A) de la broche (20), **caractérisé en ce que**
l'élément de fixation (58) est pressé entre une partie non filetée (24a) agencée sur une partie d'extrémité avant (20a) de la broche (20) et la roue à vis sans fin (54), l'élément de fixation (58) étant une douille cylindrique creuse.

2. Dispositif (10) de réglage longitudinal selon la revendication 1, dans lequel la broche (20) est vissée, au niveau de la section d'extrémité avant (20a), dans le filetage intérieur (56) de la roue à vis sans fin (54) de la transmission (50).

3. Dispositif (10) de réglage longitudinal selon l'une des revendications 1 ou 2, dans lequel, en réaction à une action de force prédéterminée, par exemple en cas de collision, une force provenant du premier rail (12) est apte à être dérivée vers le deuxième rail (14) par l'intermédiaire de la transmission (50), de la broche (20) et de l'écrou de broche (30).

4. Dispositif (10) de réglage longitudinal selon l'une des revendications 1 à 3, dans lequel l'élément de fixation (58) assure une liaison par complémentarité de forme de la broche (20) avec la roue à vis sans fin (54).

5. Dispositif (10) de réglage longitudinal selon l'une des revendications 1 à 4, dans lequel l'élément de fixation (58) assure une liaison par friction de la broche (20) avec la roue à vis sans fin (54).

6. Dispositif (10) de réglage longitudinal selon l'une des revendications 1 à 5, dans lequel la broche (20) comporte une partie non filetée (24b) au niveau d'une partie d'extrémité arrière (20b).

7. Dispositif (10) de réglage longitudinal selon l'une des revendications 1 à 6, dans lequel une partie d'extrémité arrière (20b) de la broche (20) est montée dans un palier de rotation (40) dans le premier rail (12) .

8. Dispositif (10) de réglage longitudinal selon la revendication 7, dans lequel la partie d'extrémité arrière (20b) de la broche (20) est montée dans le palier de rotation (40) au moyen d'une partie non filetée (24b).

9. Dispositif (10) de réglage longitudinal selon l'une des revendications 1 à 8, dans lequel le filetage extérieur (22) de la broche (20) et le filetage intérieur (56) de la roue à vis sans fin (54) sont réalisés sous la forme d'un filetage trapézoïdal.

10. Dispositif (10) de réglage longitudinal selon l'une des revendications 1 à 9, dans lequel le filetage extérieur (22) de la broche (20) et le filetage intérieur (56) de la roue à vis sans fin (54) sont à double filet.

11. Siège de véhicule (1) comprenant un dispositif (10) de réglage longitudinal selon l'une des revendications précédentes.
